# EUROPÄISCHE PATENTSCHRIFT

(11) **EP 4 067 708 B1**
(45) Veröffentlichungstag und Bekanntmachung des Hinweises auf die Patenterteilung: **13.11.2024**
(21) Anmeldenummer: 21199775.4
(22) Anmeldetag: 29.09.2021
(51) Int. Cl.: F16K 1/42, F16K 31/06, F16K 1/36, F16K 31/40

(54) **VENTILANORDNUNG UND SCHALTVENTIL ZUR REGELUNG EINES MASSENSTROMES**
VALVE ASSEMBLY AND SWITCHING VALVE FOR CONTROLLING A MASS FLOW
AGENCEMENT DE SOUPAPE ET SOUPAPE DE COMMUTATION DESTINÉE À LA RÉGULATION D'UN FLUX MASSIQUE

(30) Priorität: 30.03.2021 DE 102021107997
(43) Veröffentlichungstag der Anmeldung: 05.10.2022
(73) Patentinhaber: Otto Egelhof GmbH & Co. KG, 70736 Fellbach (DE)
(72) Erfinder: Willers, Eike, 70469 Stuttgart (DE); Auweder, Andreas, 71665 Vaihingen (DE); Lang, Markus, 70736 Fellbach (DE)
(74) Vertreter: Mammel und Maser Patentanwälte PartG mbB

(56) Entgegenhaltungen:
- DE-A1- 102010 039 127
- DE-A1- 19 917 756
- KR-U- 20110 003 420
- US-A- 4 228 987
- US-A1- 2006 071 193

## Beschreibung

Die Erfindung betrifft eine Ventilanordnung und ein Schaltventil mit einer solchen Ventilanordnung zur Regelung eines Massenstromes in einem Kälte- oder Wärmekreislauf.

Aus der DE 10 2013 107 060 A1 ist ein Schaltventil zur Regelung eines Massenstromes in einem Kälte- oder Wärmekreislauf bekannt. Dieses Schaltventil umfasst ein Ventilgehäuse, welches eine Zuführöffnung und eine Abführöffnung umfasst. An einem Ventilkolben ist ein Ventilschließglied vorgesehen, das in einer Schließposition an einem zwischen der Zuführöffnung und der Abführöffnung angeordneten Ventilsitz in einer Schließposition anliegt. Dem Ventilschließglied gegenüberliegend ist ein Pilotventil vorgesehen, welches im Ventilkolben eine Pilotbohrung aufweist, welche in die Durchgangsbohrung mündet und den Ventilkolben durchquert. Zur Ansteuerung des Ventilkolbens ist eine Wegerzeugungseinrichtung vorgesehen, welche einen betätigbaren Stößel aufweist, der einen die Pilotbohrung schließenden Schließkörper aufnimmt und mit dem Schließkörper die Pilotbohrung freigebende Öffnungsposition überführbar ist.

Des Weiteren ist im Ventilgehäuse zwischen der Zuführöffnung und der Pilotbohrung ein Bypasskanal ausgebildet. Bei einem Schaltventil liegt ein am Ventilschließglied angeordnetes Dichtelement im Ventilsitz an, wobei eine Schließkraft einer am Schließkörper angreifenden Schließfeder vollständig auf das Dichtelement zur abdichtenden Anordnung übertragen wird.

Aus der KR 2011 0003420 U ist ein Schaltventil mit einem Pilotventil bekannt. Dieses Pilotventil ist in eine Hülse eingepresst. Das Pilotventil umfasst des Weiteren ein Dichtelement, an welchem Dichtflächen vorgesehen sind, die in einer Schließposition an dem Ventilsitz anliegen. Aus der US 4 228 987 A ist des Weiteren ein Pilotventil für ein Schaltventil bekannt. Eine äußere Hülse ist auf einen Ventilkörper aufgepresst oder aufgeschraubt. Zwischen der äußeren Hülse und dem Ventilkörper ist ein Dichtelement vorgesehen, welches an dem Ventilsitz in einer Schließposition anliegt.

Der Erfindung liegt die Aufgabe zugrunde, eine Ventilanordnung sowie ein Schaltventil mit einer solchen Ventilanordnung vorzuschlagen, welche unter Beibehaltung der Dichtwirkung eine erhöhte Lebensdauer, insbesondere auch beim Einsatz von verschiedenen Medien, ermöglicht.

Diese Aufgabe wird durch eine Ventilanordnung gelöst, bei welcher der Ventilsitz eine Anschlagfläche und eine Dichtfläche aufweist, die benachbart zueinander ausgerichtet sind sowie das Ventilschließglied eine Abstützfläche und eine benachbart dazu angeordnete Abdichtfläche aufweist, wobei am Ventilsitz oder Ventilschließglied ein elastisches Dichtelement vorgesehen ist, an welchem die Dichtfläche oder die Abdichtfläche ausgebildet ist und die Dichtfläche oder die Abdichtfläche einen Dichtvorsprung umfasst, die zur gegenüberliegenden Abdichtfläche oder Dichtfläche ausgerichtet ist und wobei die Abstützfläche des Ventilschließgliedes und die Anschlagfläche des Ventilsitzes in einer Schließposition des Ventilschließgliedes im Ventilsitz aneinander anliegen und eine Wegbegrenzung zwischen dem Ventilschließglied und dem Ventilsitz bilden, wobei der Dichtvorsprung zumindest teilweise in das Dichtelement eingepresst ist. Diese Ventilanordnung ermöglicht, dass in einer Schließposition des Ventilschließgliedes zum Ventilsitz eine Kraftentlastung auf das elastische Dichtelement wirkt, da die Abstützfläche und die Anschlagfläche in der Schließposition fest aneinander liegen, sodass die Schließkraft des Ventilschließglieds nicht in vollem Umfang auf die Dichtung wirkt. Gleichzeitig kann durch die Ausgestaltung des Dichtvorsprunges eine hinreichende Abdichtung durch einen Formschluss zwischen dem Dichtvorsprung und der gegenüberliegenden Fläche - also der Dichtfläche oder der Anschlagfläche - gegeben sein. Diese formschlüssige Abdichtung ist sowohl für den Fall möglich, dass der Dichtvorsprung am elastischen Dichtelement vorgesehen ist und an einer gegenüberliegenden Dichtfläche oder Abdichtfläche anliegt, sodass das hervorstehende Volumen des Dichtvorsprunges in das Dichtelement eingepresst wird. Diese formschlüssige Abdichtung ist auch dann gegeben, sofern der Dichtvorsprung an der Anschlagfläche oder Abstützfläche vorgesehen ist und in das elastische Dichtelement zumindest teilweise eingepresst wird, sodass durch den gegenüber dem elastischen Dichtelement fest ausgebildeten Dichtvorsprung an der Anschlagfläche oder der Abstützfläche ein Volumen im Umfang des Dichtvorsprungs im elastischen Dichtelement verdrängt wird.

Diese Ventilanordnung ist bevorzugt für ein NC (Normally Closed)-Schaltventil als auch für ein NO (Normally Open)-Schaltventil einsetzbar. Bei einem NC-Schaltventil ist in einer Ausgangsposition das Ventilschließglied in einer Schließposition zum Ventilsitz angeordnet. Bei einem NO-Schaltventil ist das Ventilschließglied in einer Ausgangsposition gegenüber dem Ventilsitz abgehoben.

Bevorzugt ist vorgesehen, dass der Ventilkolben eine Dichthülse und einen von der Dichthülse zumindest teilweise umgebenen Ventilkörper aufweist und zwischen der Dichthülse und dem Ventilkörper das Dichtelement aufgenommen ist. Dadurch kann in einfacher Weise das Dichtelement zum Ventilkörper gehalten werden. Zudem können verschiedene Geometrien des Dichtelementes in einfacher Weise eingesetzt werden.

Beim Ventilkolben, der vorzugsweise aus dem Ventilkörper und der daran befestigten Dichthülse aufgebaut ist, kann eine Stirnseite der Dichthülse die Abstützfläche bilden, welche für eine Wegbegrenzung des Ventilschließgliedes in der Schließposition zum Ventilsitz vorgesehen ist. Alternativ kann vorgesehen sein, dass an einer zum Ventilsitz weisenden Stirnseite des Ventilkörpers die Abstützfläche vorgesehen ist.

Vorteilhafterweise ist zwischen dem Ventilkörper und der Dichthülse ein Aufnahmevolumen für das elastische Dichtelement ausgebildet, wobei das in das Aufnahmevolumen eingesetzte Dichtelement im Volumen kleiner als der Aufnahmeraum ist. Dadurch ist das Aufnahmevolumen durch das Dichtelement nicht vollständig ausgefüllt. Dies weist den Vorteil auf, dass bei einem Quellen des Dichtelementes oder bei einer Volumenvergrößerung des Dichtelements, beispielsweise durch Temperatur und/
oder Druck, das Dichtelement im Aufnahmevolumen sich ausdehnen kann und die Dichtfläche beziehungsweise Abdichtfläche unbeeinflusst bleibt.

Vorteilhafterweise ist vorgesehen, dass die am Ventilkörper angeordnete Dichthülse, welche den Ventilkörper zumindest abschnittsweise außen umgreift, an einer Stirnseite einen radial nach innen vorstehenden Ringbund aufweist, welcher an einem Außenumfang des Dichtelementes angreift, und das Dichtelement im Aufnahmevolumen zum Ventilkörper in axialer Richtung fixiert. Der Außenumfang des Dichtelements umfasst, vorzugsweise in radialer Umfangsrichtung, zumindest eine Unterbrechung oder Vertiefung. Alternativ kann die Dichthülse, welche in den Ventilkörper einsteckbar ist, an einer Stirnseite einen radial nach außen vorstehenden Ringbund aufweisen, welcher an einem Innenumfang des Dichtelements angreift und dieses im Aufnahmevolumen zum Ventilkörper fixiert. Die erste Alternative ist bevorzugt bei kleineren Durchmessern der Durchgangsbohrung der Ventile vorgesehen. Die zweite Alternative ist bevorzugt für größere Durchgangsbohrungen des Ventils vorgesehen, bei welcher bevorzugt auch größere Dichtungsdurchmesser benötigt werden. In beiden Fällen ist eine einfache Montage des Dichtelementes zum Ventilkörper zusammen mit der Dichthülse ermöglicht.

Vorteilhafterweise ist vorgesehen, dass das Dichtelement durch den Ringbund der Dichthülse in einer Richtung, vorzugsweise in axialer Richtung des Ventilkörpers, form- und/oder kraftschlüssig, insbesondere fest verpresst, fixiert gehalten oder verschiebbar geführt ist und in einer weiteren Richtung, vorzugsweise in radialer Richtung, ein Freiraum im Aufnahmevolumen verbleibt. Dadurch sind im Hinblick auf die Öffnungs- und Schließbewegung zur abdichtenden Anordnung definierte Verhältnisse in der Schließposition des Ventilschließgliedes zum Ventilsitz gegeben, wohingegen in radialer Richtung das Dichtelement sich gegebenenfalls ausdehnen kann.

Vorteilhafterweise ist vorgesehen, dass der Dichtvorsprung als eine umlaufende Wulst ausgebildet ist, welche am Dichtelement oder an der Dichthülse beziehungsweise Ventilschließglied oder am Ventilsitz vorgesehen ist. Eine solche radial umlaufende Wulst ist in der Geometrie einfach herzustellen und kann eine hinreichende Abdichtung ausbilden.

Des Weiteren ist bevorzugt zwischen dem Dichtelement und dem Ventilkörper zumindest eine in radialer und/oder axialer Richtung hervorstehende Dichtlippe oder zumindest ein hervorstehender Dichtring vorgesehen. Dadurch ist sichergestellt, dass eine Umläufigkeit des zu steuernden Mediums zwischen dem Ventilkörper und dem Dichtelement verhindert ist, sodass selbst bei einem Anliegen des Dichtelementes am Ventilschließglied zum Ventilsitz ein Leckagestrom verhindert wird.

Gemäß einer erfindungsgemäßen Ausführungsform des Ventilkolbens ist die Dichthülse mit dem Ventilkörper durch eine Rastverbindung verbunden. Der Ventilkörper ist gemäß einer alternativen erfindungsgemäßen Ausführungsform durch eine Umbördelung eines Randes der Dichthülse zum Ventilkörper fest vorgesehen. Des Weiteren kann alternativ die Dichthülse durch eine Umbördelung deren Rand den Ventilkörper innerhalb der Dichthülse fixieren, wobei zwischen dem Ventilkörper und der Umbördelung beziehungsweise dem umgebördelten Rand der Dichthülse ein Spalt gebildet ist, sodass der Ventilkörper mit axialem Spiel in der Dichthülse gehalten ist.

Gemäß einer alternativen Ausführungsform der Ventilanordnung sind der Ventilkörper des Ventilkolbens und das Dichtelement als ein Zwei-Komponenten-Spritzgussteil hergestellt. Diese Ausgestaltung ermöglicht, dass in einem Arbeitsgang ein Ventilkolben für eine Ventilanordnung herstellbar ist. Bei dieser Ausführungsform kann eine zusätzliche Montage einer Dichthülse zur Fixierung des Dichtelementes am Ventilkörper entfallen.

Des Weiteren kann alternativ zur Ausführungsform des Ventilkörpers und des Dichtelementes als Zwei-Komponenten-Spritzgussteil das Dichtelement durch eine Klebe- und/oder Pressverbindung mit dem Ventilkolben verbunden werden. Durch diese Klebe- und/oder Pressverbindung kann auch ein Teil des Dichtelementes einen Abschnitt des Ventilkolbens zur besseren Fixierung hintergreifen.

Nach einer ersten alternativen Ausführungsform der Ventilanordnung ist vorgesehen, dass der Dichtvorsprung am Ventilsitz angeordnet ist und in Hubrichtung des Ventilschließgliedes gegenüber der Anschlagfläche am Ventilsitz hervorsteht. Dieser Dichtvorsprung an der Dichtfläche und die Anschlagfläche sind vorteilhafterweise aus einem Material ausgebildet und einer Durchgangsöffnung zugeordnet, an der der Ventilsitz ausgebildet ist.

Alternativ kann vorgesehen sein, dass der Dichtvorsprung am elastischen Dichtelement vorgesehen ist, welches vorzugsweise am Ventilschließglied angeordnet ist und in Richtung auf eine Dichtfläche am Ventilsitz weist, die an die Anschlagfläche angrenzt. In diesem Fall können die Dichtfläche und die Anschlagfläche in einer Ebene liegen.

Vorteilhafterweise ist vorgesehen, dass der Dichtvorsprung gegenüber der benachbarten Anschlagfläche oder Abstützfläche vorzugsweise zwischen 0,05 mm und 0,5 mm hervorsteht.

Bei der vorteilhaften Ausführungsform der Ventilanordnung, bei der der Ventilsitz die Anschlagfläche und benachbart dazu die Dichtfläche mit dem Dichtvorsprung aufweist und dem Dichtvorsprung gegenüberliegend das elastische Dichtelement am Ventilschließglied vorgesehen ist, kann bei Anordnung des Ventilschließgliedes in einer Schließposition zum Ventilsitz der Dichtvorsprung im Dichtelement ein Volumen von 1 % bis 30 % des Dichtelementes verdrängen. Dadurch kann eine hinreichende Abdichtung oder eine elastische Verformung des Dichtelementes ermöglicht sein.

Des Weiteren ist bevorzugt vorgesehen, dass der Dichtvorsprung, der an der Dichtfläche des Ventilsitzes vorgesehen ist, bei einer Durchgangsöffnung mit einem Durchmesser von 1 mm bis 40 mm vorgesehen ist.

Eine weitere bevorzugte Ausgestaltung der Ventilanordnung sieht vor, dass dem Ventilschließglied des Ventilkolbens gegenüberliegend ein Pilotventil vorgesehen ist. Dieses Pilotventil weist eine Pilotbohrung im Ventilkörper des Ventilkolbens auf, die den Ventilkörper durchquert und in die Durchgangsbohrung mündet. Des Weiteren ist eine Wegerzeugungseinrichtung vorgesehen, welche einen betätigbaren Stößel aufweist, der einen die Pilotbohrung schließenden Schließkörper aufnimmt und mit dem Schließkörper in eine die Pilotbohrung freigebende Öffnungsposition überführbar ist. Zwischen der Zuführöffnung und der Pilotbohrung ist bevorzugt ein Bypasskanal ausgebildet. Diese Ventilanordnung kann somit nicht nur bei einem Schaltventil, sondern auch bei einem Ventil mit einem Pilotventil vorgesehen sein.

Bevorzugt ist vorgesehen, dass die Dichthülse auf den Ventilkörper aufgepresst oder aufgeklebt oder nach dem Positionieren der Dichthülse zum Ventilkörper zumindest teilweise stoffschlüssig verbunden ist. Dies ermöglicht eine einfache Montage der Dichthülse zum Ventilkörper unter Einbindung des Dichtelementes.

Gemäß einer bevorzugten Ausführungsform ist vorgesehen, dass die am Ventilkörper befestigte Dichthülse eine radial nach außen gerichtete Schulter aufweist, an der ein Rückstellelement angreift, welches zwischen dem Ventilsitz und dem Ventilkolben geführt ist. Diese Schulter ist insbesondere bei der Ausgestaltung des Ventilkolbens als Pilotventil vorgesehen, wodurch eine Öffnungsbewegung des Ventilkolbens zum Ventilsitz begrenzt ist.

Bevorzugt ist vorgesehen, dass zwischen einem Außenumfang der am Ventilkörper angeordneten Dichthülse und einer Führungsbuchse des Stößels der Bypasskanal durch eine Spielpassung zwischen der Dichthülse und der Führungsbuchse gebildet ist oder dass zumindest am Außenumfang der Dichthülse eine Abflachung oder eine Längsrillung ausgebildet ist. Dadurch kann in konstruktiv einfacher Weise eine Führung des Ventilkolbens in der Führungsbuchse des Stößels ermöglicht sein und gleichzeitig für die Funktion des Pilotventils ein Bypasskanal ausgebildet sein, durch welche das Medium zur Pilotventilbohrung gelangen kann.

Eine weitere bevorzugte Ausgestaltung des Ventilkolbens sieht vor, dass die Dichthülse mit dem Ventilkörper in einem Bereich verpresst ist, der innerhalb der radial nach außenstehenden Schulter liegt. Durch diese radial außen umlaufende Schulter kann in dem Bereich, der sich in axialer Richtung gesehen über die Breite der Schulter erstreckt, eine erhöhte Kraft erzielt werden, um an dem Ventilkörper anzugreifen. In einem weiteren Bereich in axialer Richtung, der entgegengesetzt zum Ventilschließglied sich erstreckt, kann zwischen der Dichthülse und dem Ventilkörper ein kleiner Ringspalt ausgebildet sein. Bevorzugt ist vorgesehen, dass an einem Außenumfang des Ventilkörpers eine Rändelung, insbesondere Längsrändelung, vorgesehen ist. Dies ermöglicht eine Vereinfachung in der Verpressung der Dichthülse zum Ventilkörper.

Des Weiteren ist bevorzugt vorgesehen, dass der Ventilkörper einen zur Pilotbohrung ausgerichteten Pilotventilsitz aus einem Kunststoffmaterial, insbesondere Teflon, aufweist, der vorzugsweise als Ring in den Ventilkörper eingepresst ist. Dadurch kann des Weiteren ermöglicht werden, dass die Leckagerate verringert wird. Zudem kann eine Minimierung von Schaltgeräuschen erzielt werden.

Die der Erfindung zugrundeliegende Aufgabe wird des Weiteren durch ein Schaltventil zur Regelung eines Massenstromes in einem Kälte- oder Wärmekreislauf gelöst, welches ein Ventilgehäuse mit einer Zuführöffnung oder einer Abführöffnung aufweist sowie einen Ventilkolben, welcher ein zur Abführöffnung weisendes Ventilschließglied aufweist, das in einer Schließposition an einer Durchgangsbohrung zwischen der Zuführöffnung und der Abführöffnung angeordneten Ventilsitz in einer Schließposition anliegt, wobei das Schaltventil eine Ventilanordnung nach einem der vorhergehenden Ausführungsformen umfasst.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Schnittansicht eines nicht erfindungsgemäßen Schaltventils,
Figur 2 eine schematisch vergrößerte Ansicht einer Ventilanordnung des Schaltventils gemäß Figur 1 in einer Öffnungsposition,
Figur 3 eine schematisch vergrößerte Ansicht der Ventilanordnung gemäß Figur 2 in einer Schließphase,
Figur 4 eine schematisch vergrößerte Ansicht der Ventilanordnung gemäß Figur 2 in einer Schließposition,
Figur 5 eine schematisch vergrößerte Ansicht eines Ventilkolbens gemäß einer alternativen , nicht erfindungsgemäßen Ausführungsform zu den Figuren 1 bis 4,
Figur 6 eine alternative, erfindungsgemäße Ausführungsform des Ventilschließgliedes zu Figur 2,
Figur 7 eine schematische Schnittansicht einer alternativen, erfindungsgemäßen Ausführungsform zu Figur 6,
Figur 8 eine schematische Schnittansicht einer weiteren alternativen, erfindungsgemäßen Ausführungsform zu Figur 2, und
Figur 9 eine schematische Schnittansicht einer weiteren alternativen, nicht erfindungsgemäßen Ausführungsform zu Figur 2.

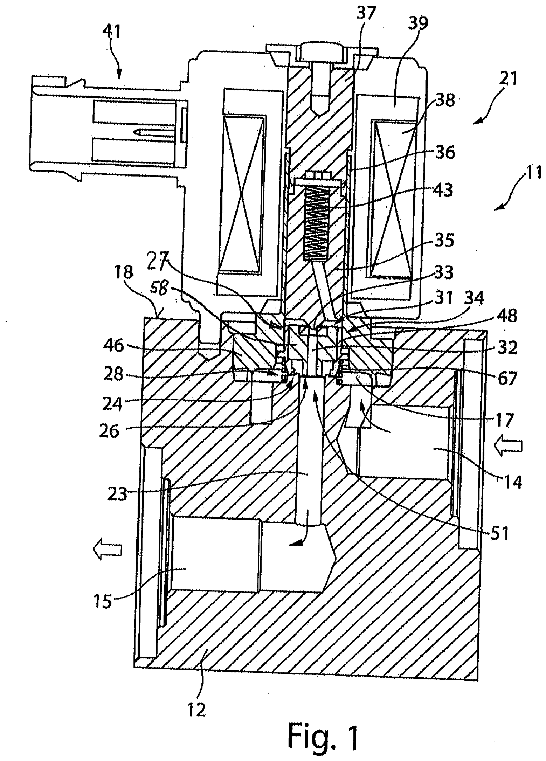

In Figur 1 ist eine schematische Schnittansicht einer ersten Ausführungsform eines nicht erfindungsgemäßen Schaltventils 11 dargestellt. Dieses Schaltventil 11 umfasst ein Ventilgehäuse 12 mit einer Zuführöffnung 14 für einen Massenstrom, insbesondere ein Kältemittel sowie eine Abführöffnung 15 sowie eine die Zuführöffnung 14 und die Abführöffnung 15 verbindende Kammer 17 oder einen Kältemittelkanal. Die Zuführöffnung 14 und Abführöffnung 15 weisen jeweils Anschlüsse für Versorgungsleitungen oder weitere Komponenten auf.

Die Kammer 17 im Ventilgehäuse 12 ist zu einer Gehäuseseite 18 hin offen ausgebildet, an welcher eine Wegerzeugungseinrichtung 21 lösbar befestigt ist. Die Kammer 17 geht in eine Durchgangsbohrung 23 über, welche von einem Ventilsitz 24 umgeben ist, an welchem ein Ventilschließglied 26 eines Ventilkolbens 27 in einer Schließposition 28 anliegt.

Der Ventilkolben 27 weist an seinem dem Ventilschließglied 26 gegenüberliegenden Ende eine Pilotbohrung 32 auf, welche mit einem Schließkörper 33 verschließbar ist. Die Pilotbohrung 32 und der Schließkörper 33 bilden ein Pilotventil 31. Dieser Schließkörper 33 ist an einem Stößel 35 fest angeordnet, welcher durch die Wegerzeugungseinrichtung 21 auf und ab beziehungsweise hin und her bewegbar ist.

Die Wegerzeugungseinrichtung 21 umfasst gemäß diesem Ausführungsbeispiel ein Ankerrohr 36, welchem ein Kern 37 zugeordnet ist. Eine Spule 38 umgibt das Ankerrohr 36, welches wiederum in ein Joch 39 eingebunden ist. Über elektrische Anschlussleitungen 41 ist die Wegerzeugungseinrichtung ansteuerbar und fassbar.

Der Stößel 35 ist unter Zwischenschaltung einer Rückstellfeder 43 zum Kern 37 bewegbar zum Ankerrohr 36 gelagert, das heißt, dass bei der Bestromung der Spule 38 der Stößel 35 in das Ankerrohr 36 gegen die Federkraft der Rückstellfeder 43 hineingezogen wird und beim Abschalten der Spule 38 die Rückstellfeder 43 den Stößel 35 in eine Schließbewegung überführt sowie den Stößel 35 in einer Schließposition anordnet, wie dies in Figur 1 dargestellt ist. Dabei greift der Schließkörper 33 in die Pilotbohrung 32 des Ventilkolbens 27. Das Ventilschließglied 26 schließt die Durchgangsbohrung 23 und liegt am Ventilsitz 24 an. Der Ventilkolben 27 ist bevorzugt in einer in das Ventilgehäuse 12 einsetzbaren Führungsbuchse 46 geführt. Alternativ kann der Ventilkolben 27 auch unmittelbar an einem Wandabschnitt der zu einer Gehäuseseite 18 hin offenen Kammer 17 geführt sein. Zwischen diesem Wandabschnitt der Führungsbuchse 46 oder der Kammer 17 und dem Ventilkolben 27 ist ein Bypasskanal 48 vorgesehen, wodurch eine Verbindung zwischen der Zugangsöffnung 14 zum Pilotventil 31 geschaffen wird. Nach dem Abheben des Schließkörpers 33 aus der Pilotbohrung 32 kann der Massenstrom durch die Pilotbohrung 32 hindurch in die Durchgangsöffnung 23 strömen, da sich die Pilotbohrung 32 vollständig durch den Ventilkolben 27 bis zum Ventilschließglied 26 erstreckt. Daraufhin hebt der Ventilkolben 27 mit der Unterstützung durch das Federelement 67 von dem Ventilsitz 24 ab.

Das in Figur 1 dargestellte Ventil 11 ist ein sogenanntes NC-Ventil (Normally Closed-Ventil), das heißt, dass bei einer nicht bestromten Spule 38 das Ventil 11 geschlossen ist und einen Durchgang zwischen der Zu- und Abführöffnung 14, 15 gesperrt ist. Bei einem solchen Ventil 11 kommt beispielsweise eine monostabile Wegerzeugungseinrichtung 21 zum Einsatz, die nur eine Position des Stößels 35 hält, solange die Spule 38 bestromt ist.

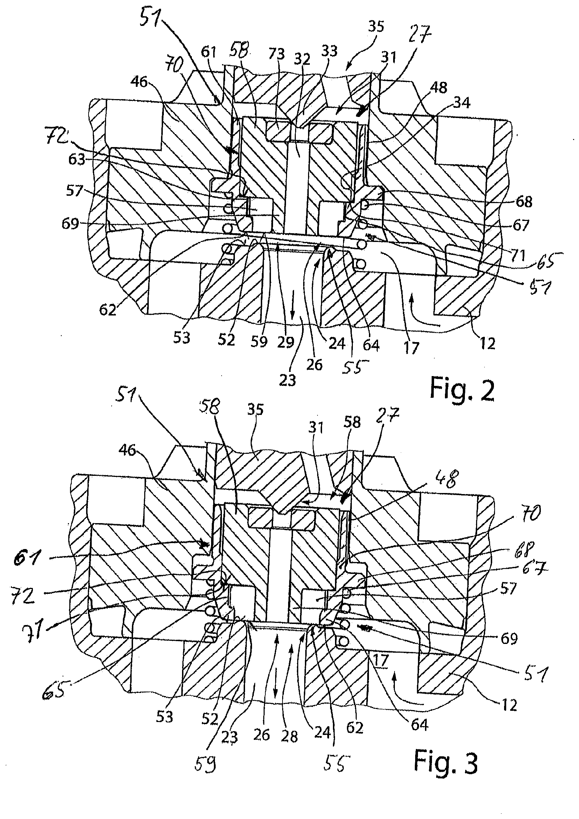

In Figur 2 ist eine schematisch vergrößerte Ansicht einer Ventilanordnung 51 dargestellt. Diese Ventilanordnung 51 ist beispielsweise im Schaltventil 11 gemäß Figur 1 vorgesehen. Die Ventilanordnung 51 umfasst den Ventilsitz 24 und das Ventilschließglied 26. Der Ventilsitz 24 umfasst eine Dichtfläche 52 sowie eine Anschlagfläche 53. Diese Dichtfläche 52 und die Anschlagfläche 53 grenzen bevorzugt aneinander an bzw. gehen ineinander über. Die Dichtfläche 52 umgibt bevorzugt die Durchgangsbohrung 23. Die Anschlagfläche 53 erstreckt sich außerhalb der Dichtfläche 52. An der Dichtfläche 52 ist bevorzugt ein Dichtvorsprung 55 ausgebildet. Dieser Dichtvorsprung 55 beispielsweise ist wulstförmig, halbkreisförmig oder bogensegmentförmig ausgebildet. Dieser Dichtvorsprung 55 steht in axialer Richtung auf das Ventilschließglied 26 gegenüber der Anschlagfläche 53 hervor. Die Dichtfläche 52 und Anschlagfläche 53 sind bevorzugt aus demselben Material ausgebildet, insbesondere sind die Dichtfläche 52 und die Anschlagfläche 53 unmittelbar am Ventilgehäuse 12 angeformt. Alternativ kann auch vorgesehen sein, dass der Ventilsitz 24 als ein Einsetzelement ausgebildet ist, welches am Ventilgehäuse 12 zur Durchgangsbohrung 23 befestigbar ist. Auch kann der Ventilsitz 24 aus separaten Elementen bestehen und zusammengesetzt werden, wobei ein Element die Dichtfläche 52 und ein weiteres Element die Anschlagfläche 53 umfasst. Auch kann nur eines der Elemente - also die Dichtfläche 52 oder die Anschlagfläche 53 - separat ausgebildet sein und mit den weiteren Elementen, welche unmittelbar am Ventilgehäuse 12 angeordnet ist, den Ventilsitz 24 bilden.

Die Durchgangsbohrung 23 weist beispielsweise einen Durchmesser von 1 mm bis 40 mm auf. Der Dichtvorsprung 55 kann gegenüber der benachbarten Anschlagfläche 53 um 0,05 mm bis 0,5 mm hervorstehen.

Der Ventilkolben 27 weist in Richtung auf den Ventilsitz 24 das Ventilschließglied 26 auf. Das Ventilschließglied 26 umfasst eine Abstützfläche 62 und eine Abdichtfläche 59. Diese grenzen bevorzugt aneinander an. Das Ventilschließglied 26 wird gemäß dem Ausführungsbeispiel durch ein Dichtelement 57 und eine Dichthülse 61 gebildet. Durch die Dichthülse 61 ist das Dichtelement 57 zum Ventilkörper 58 des Ventilkolbens 27 fixiert gehalten. Die Dichthülse 61 weist stirnseitig die Abstützfläche 62 auf. Benachbart dazu ist die Abdichtfläche 59 vorgesehen. Diese Abdichtfläche 59 liegt bevorzugt radial innerhalb der Abstützfläche 62. Die Dichtfläche 59 ist bevorzugt stirnseitig zum Ventilsitz weisend am Dichtelement 57 vorgesehen.

Das Dichtelement 57 ist in einem zwischen der Dichthülse 61 und dem Ventilkörper 58 gebildeten Aufnahmeraum 63 positioniert. Die Dichthülse 61 weist stirnseitig einen Ringbund 64 auf, der radial nach innen vorsteht. Das Dichtelement 57 ist bevorzugt gestuft mit zwei unterschiedlichen breiten Querschnitten ausgebildet. Dadurch kann das Dichtelement 57 mit dem kleineren Querschnitt stirnseitig zum Ventilkörper 58 durch den Ringbund 64 fixiert werden. Des Weiteren fixiert der Ringbund 64 in axialer Richtung den größeren Querschnitt des Dichtelements 57 zum Ventilkörper 58. Im Aufnahmeraum 63 ist zwischen dem Dichtelement 57 und der Dichthülse 61 ein Freiraum 65 ausgebildet, sodass sich das Dichtelement 57 mit dem größeren Ringquerschnitt in diesem Bereich radial ausdehnen kann. Das Ventilschließglied 26 weist bevorzugt in einer Ebene liegend die Dichtfläche 59 des Dichtelementes 57 und die Abstützfläche 62 an der Dichthülse 61 auf.

Das Ventilschließglied 26 ist in einer Öffnungsposition zum Ventilsitz 24 dargestellt. Die Öffnungsbewegung des Ventilschließgliedes 26 wird durch das Federelement 67 unterstützt, welches in Richtung auf den Stößel 35 wirkt.

Durch die Dichthülse 61 ist die maximale Öffnungsposition des Ventilschließgliedes 26 begrenzt. Eine radial nach außen weisende Schulter 68 der Dichthülse 61 kann an der Führungsbuchse 46 anliegen. Gegenüberliegend greift das Federelement 67 an der Schulter 68 an und wird teilweise auch durch eine Außenseite des Ringbundes 64 geführt.

Zwischen einem Außenumfang der Dichthülse 61 und der Führungsbuchse 46 ist der Bypasskanal 48 gebildet. Dabei kann vorgesehen sein, dass am Außenumfang der Dichthülse 61 Längsrillen vorgesehen sind und/oder dass in der Führungsbuchse 46 Längsrillen vorgesehen sind. Alternativ kann die Dichthülse 61 am Außenumfang ein oder mehrere Abflachungen aufweisen. Dies weist den Vorteil auf, dass eine radiale Führung der Dichthülse 61 in der Führungsbuchse 46 aufrechterhalten bleibt und dennoch hinreichend Freiraum für das Durchströmen des Mediums von der Kammer 17 zur Pilotbohrung 32 ermöglicht ist.

Die Dichthülse 61 ist bevorzugt auf den Ventilkörper 58 aufgepresst. Bevorzugt wird das Dichtelement 57 auf einem hülsenförmigen Abschnitt 69 des Ventilkörpers 58 aufgesetzt. Darauffolgend wird der Ventilkörper 58 in den Hülsenabschnitt 70 der Dichthülse 61 eingeführt, bis die Ringfläche 71 des Ventilkörpers 58 an einer komplementären Ringfläche 72 in der Dichthülse 61 anliegt. Dadurch wird eine axiale Ausrichtung der Dichthülse 61 zum Ventilkörper 58 erzielt. Gleichzeitig kann dadurch eine ebene stirnseitige Ausbildung des Ventilschließgliedes 26 in Richtung auf den Ventilsitz 24 gegeben sein. Zudem kann der Ringbund 64 in axialer Richtung das Dichtelement 57 kraftschlüssig mit dem Ventilkörper 58 verbinden. Zwischen dem Ventilkörper 58 und der Dichtungshülse 61 wird in einem Bereich, in welchem die Schulter 68 ausgebildet ist, eine Presspassung ausgebildet. Der sich daran anschließende Hülsenabschnitt 70 kann mit einem geringen Spalt zum Ventilkörper 58 ausgebildet bleiben.

Am Ventilkörper 58 ist dem Ventilschließglied 26 gegenüberliegend das Pilotventil 31 ausgebildet. Vorzugsweise ist ein in den Ventilkörper 58 eingesetzter, insbesondere eingepresster, Pilotventilsitz 73 vorgesehen. Dieser besteht bevorzugt aus Polytetrafluorethylen. In der Öffnungsstellung des Ventilschließgliedes 26 schließt der Stößel 35 die Pilotbohrung 32.

Zum Überführen des Ventilschließgliedes 26 aus der Öffnungsposition in die Schließposition wird die Bestromung der Wegerzeugungseinrichtung 21 abgeschalten. Das Rückstellelement 43 drückt den Stößel 35 und somit das Ventilschließglied 26 in Richtung auf den Ventilsitz 24.

In Figur 3 ist eine Schließphase des Ventilkolbens 27 dargestellt. In dieser Schließphase beginnt die Unterbrechung des durch die Durchgangsbohrung 23 hindurchgehenden Strömung. In der dargestellten Schließphase kommt die Abdichtfläche 59 des Dichtelements 57 zur Anlage an der Dichtfläche 52 des Ventilschließgliedes 24, insbesondere mit dem Dichtvorsprung 55.

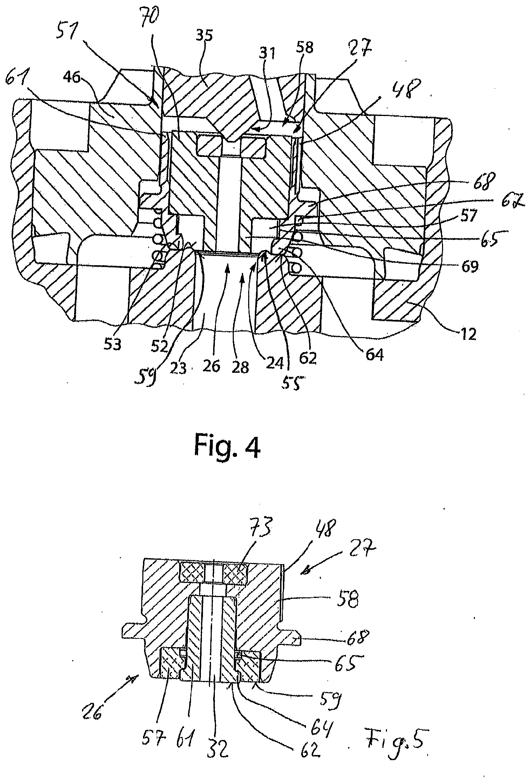

In Figur 4 ist eine schematisch vergrößerte Schnittansicht der Ventilanordnung 51 in der Schließposition des Ventilschließgliedes 26 zum Ventilsitz 24 dargestellt. Die Schließbewegung des Ventilkolbens 27 auf den Ventilsitz 24 ist durch die Abstützfläche 62 begrenzt, welche an der Anschlagfläche 53 des Ventilsitzes 24 anliegt. Dadurch wird ein definierter Formschluss mit einer vorbestimmten Kraft zwischen der Abdichtfläche 62 und der Dichtfläche 52 des Ventilsitzes 24 erzeugt. Bevorzugt verdrängt der Dichtvorsprung 55 ein Volumen im Dichtelement 57 von beispielsweise bis 1 % bis 30 %. Dies genügt für eine abdichtende Anordnung. Gleichzeitig wird ein Quetschen oder Fließen des Dichtelementes beziehungsweise eine dauerhafte Beschädigung verhindert.

In der Schließposition 28 des Ventilschließgliedes 26 zum Ventilsitz 24 ist zwischen der Anschlagfläche 53 des Ventilsitzes 24 und der Abstützfläche 62 des Ventilschließgliedes 26 beziehungsweise der Dichthülse 61 ein Kraftschluss vorgesehen. Zwischen der Dichtfläche 52 des Ventilsitzes 24 und der Abdichtfläche 59 des Dichtelementes 57 ist ein Formschluss gebildet.

Alternativ kann vorgesehen sein, dass der Dichtvorsprung 55 am Dichtelement 57 ausgebildet ist und die Dichtfläche 52 des Ventilsitzes 24 als ebene Fläche wie die Anschlagfläche 53 und vorzugsweise in derselben Ebene ausgebildet ist.

Des Weiteren kann alternativ vorgesehen sein, dass das Dichtelement 57 am Ventilsitz 24 vorgesehen ist, sodass die in den Figuren 2 bis 4 dargestellte Anordnung vertauscht ist.

In Figur 5 ist eine schematisch vergrößerte Schnittansicht einer alternativen, nicht erfindungsgemäßen Ausführungsform des Ventilschließgliedes 26 zu den Figuren 1 bis 4 dargestellt. Bei der Ausführungsform gemäß den Figuren 1 bis 4 umgreift die Dichthülse 61 zumindest abschnittsweise einen Außenumfang des Ventilkolbens 27 und fixiert das Dichtelement 57 zum Ventilkolben 27.

Bei der Ausführungsform gemäß Figur 5 ist die Dichthülse 61 ebenfalls kraft- und/oder formschlüssig an dem Ventilkolben 27 befestigbar. Dabei ist die Dichthülse 61 im Ventilkolben 27 im Bereich der Pilotbohrung 32 eingesteckt. Die Dichthülse 61 weist eine innere Durchgangsbohrung auf, die einen Teil der Pilotbohrung 32 bildet. Am stirnseitigen Ende der Dichthülse 61 ist ein radial nach außen gerichteter Ringbund 64 vorgesehen. Durch diesen Ringbund 64 wird das Dichtelement 57 zum Ventilkolben 27, insbesondere zum Ventilkörper 58, fixiert gehalten. Dabei ist bevorzugt zwischen dem Dichtelement 57 und der Dichthülse 61 ein Freiraum 65 vorgesehen. Hierbei kann es sich um einen umlaufenden Kanal oder Spalt handeln. Eine Abdichtfläche 59 des Dichtelementes 57 ist gegenüber der Abstützfläche 62 der Dichthülse 61 zurückversetzt. Dadurch kann in Analogie zur vorbeschriebenen Ausführungsform der Ventilanordnung 51 gemäß den Figuren 1 bis 4 eine Wegbegrenzung des Ventilschließgliedes 26 zum Ventilsitz 24 gegeben sein.

Bei dieser Ausführungsform gemäß Figur 5 kann ein Bypasskanal 48 in Form einer Abflachung oder Vertiefung unmittelbar an einem Außenumfang des Ventilkörpers 58 vorgesehen sein. Die Schulter 68 ist bevorzugt einteilig am Ventilkörper 58 vorgesehen. Diese kann auch durch ein separates aufgepresstes Teil ausgebildet sein. Des Weiteren kann am Ventilkörper 58 ebenfalls ein Pilotventilsitz 73 eingebracht sein.

Im Übrigen gelten für diese Ausführungsformen gemäß Figur 5 die vorstehenden Ausführungen und Alternativen gemäß den Figuren 1 bis 4.

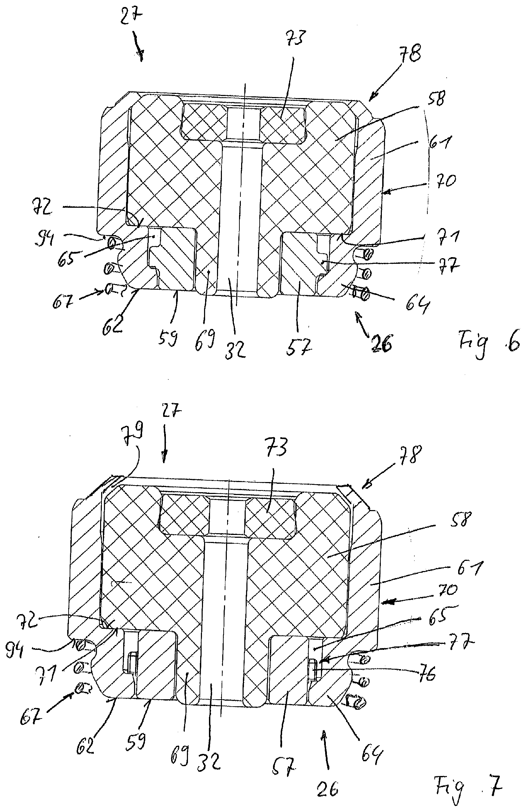

In Figur 6 ist eine schematische Schnittansicht einer alternativen, erfindungsgemäßen Ausführungsform des Ventilkolbens 27 mit dem Ventilschließglied 26 zu Figur 2 dargestellt. Dieses Ventilschließglied 26 umfasst die Dichthülse 61, in welcher ein Ventilkörper 58 eingesetzt ist. Die Dichthülse 61 ist abweichend zur Ausführungsform gemäß den Figuren 1 bis 4 ausgebildet. Die Dichthülse 61 umfasst einen zylindrischen Hülsenabschnitt 70. Zwischen dem zylindrischen Hülsenabschnitt 70 und dem Ringbund 64 ist eine Schulter 94 ausgebildet. Der Außenumfang des Ringbundes 64 ist kleiner als der Außenumfang des Hülsenabschnitts 70 ausgebildet. An der Schulter 94 liegt das Federelement 67 an. Diese kann zusätzlich noch am Außenumfang des Ringbundes 64 der Dichthülse 61 geführt sein. Das gegenüberliegende Ende des Federelements 67 kann entsprechend den Darstellungen gemäß den Figuren 1 bis 4 an dem Ventilgehäuse 12 sich abstützen. Bei dieser Ausführungsform entfällt die radial nach außen hervorstehende Schulter 68. Der Hülsenabschnitt 70 der Dichthülse 61 ist in der Führungsbuchse 46 axial verschiebbar geführt. Auch kann der Hülsenabschnitt 70 der Dichthülse 61 eine Abflachung oder dergleichen zur Bildung eines Bypasskanals 48 aufweisen. Der in den Aufnahmeraum 63 der Dichthülse 61 eingesetzte Ventilkörper 58 liegt mit einer Ringfläche 71 an einer radial nach innen ausgerichteten Ringfläche 72 der Dichthülse 61 in der Dichthülse 61 an. Am stirnseitigen Ende des Ventilkörpers 58 nimmt dieser an seinem Aufsetzabschnitt 69 das Dichtelement 57 auf. Ein radial nach innen weisender Ringbund 64 der Dichthülse 61 liegt an einem radial äußeren Umfang des Dichtelements 57 an. Bei dieser Ausführungsform weist das Dichtelement 57 eine radial nach außen weisende Ringwulst 77 auf, die sich nicht vollständig entlang der Höhe des Dichtelementes 57 erstreckt. Dadurch ist ein Freiraum 65 ausgebildet. Dieser Ringwulst 77 ist in axialer Richtung gesehen vorzugsweise nicht vollumfänglich ausgebildet, sondern weist eine oder mehrere Unterbrechungen 76 (siehe Figur 7) oder Vertiefungen auf. Dadurch kann das zu steuernde Medium, welches in den Freiraum 65 gelangt, über diese Unterbrechungen 76 oder Vertiefungen in der Ringwulst 77 wieder abströmen.

Eine Fixierung des Dichtelementes 57 und des Ventilkörpers 58 in der Dichthülse 61 ist alternativ zur gepressten Ausführungsform in Figur 2 bei der vorliegenden Ausführungsform eine Umbördelung 78 vorgesehen. Das Dichtelement 57 und darauffolgend der Ventilkolben 58 oder der Ventilkolben 58 mit dem auf dem Aufsetzabschnitt 69 positionierten Dichtelement 57 wird in die Dichthülse 61 von oben eingesetzt. Anschließend erfolgt die Umbördelung 78. Ein oberer Rand der Dichthülse 61 ist umgebördelt. Dadurch wird der Ventilkörper 58 auf die Ringfläche 71 der Dichthülse 61 gepresst und fixiert. Gleichzeitig wird das Dichtelement 57 durch den Ventilkörper 58 zum Ringbund 64 fixiert gehalten, wobei sich der Ringwulst 77 am Ringbund 64 abstützt und fixiert gehalten ist. Durch die Umbördelung 78 wird der Ventilkörper 78 spielfrei in der Dichthülse 61 zwischen der Umbördelung 78 und der Ringfläche 72 der Dichthülse 61 gehalten. Das Dichtelement 57 ist spielfrei zwischen dem Ventilkörper 58 und der Dichthülse 61 gehalten.

In Figur 7 ist eine alternative, erfindungsgemäße Ausführungsform des Ventilkolbens 27 zu Figur 6 dargestellt. Auch bei dieser Ausführungsform gemäß Figur 7 ist eine Umbördelung 78 vorgesehen. Allerdings ist zwischen der Umbördelung 78 und dem Ventilkörper 58 ein Spalt 79 ausgebildet. Dieser Spalt 79 kann auch dadurch gebildet werden, dass der Ventilkörper 58 in seiner axialen Länge gegenüber der Ausführungsform in Figur 6 verkürzt ausgebildet ist. Dadurch kann der Ventilkörper 58 und/oder das Dichtelement 57 in axialer Richtung verschiebbar beziehungsweise mit Spiel in der Dichthülse 61 angeordnet sein.

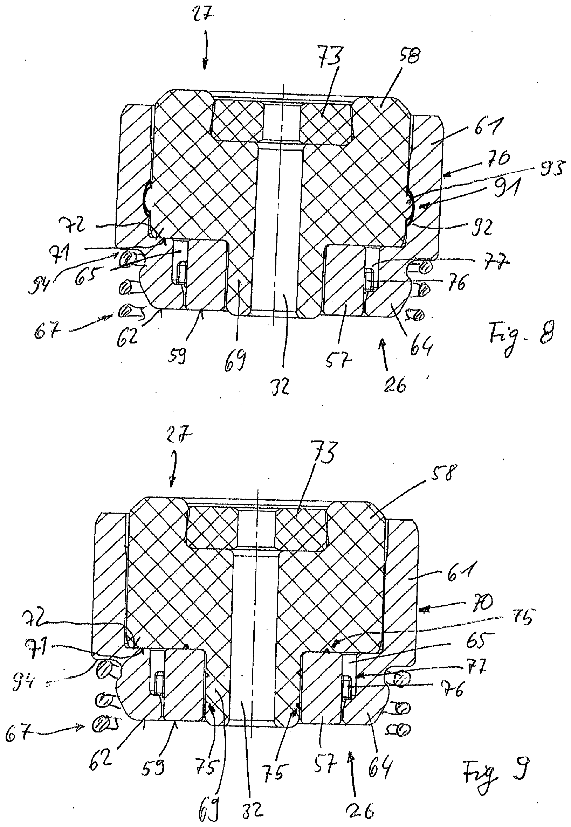

In Figur 8 ist eine weitere alternative, erfindungsgemäße Ausführungsform des Ventilkolbens 27 mit dem Ventilschließglied 26 zu Figur 2 dargestellt. Bei dieser Ausführungsform ist anstelle einer Pressverbindung zwischen dem Ventilkörper 58 und der Dichthülse 61 eine Rastverbindung 91 vorgesehen. Beispielsweise ist an einem Innenumfang der Dichthülse 61 eine ringförmige Vertiefung 92 vorgesehen, in welche ein radial nach außen weisender Vorsprung 93 am Umfang des Ventilkörpers 58 nach dem Anliegen in der Ringfläche 71 eingreift und den Ventilkörper 58 zur Dichthülse 61 in einer definierten Position fixiert.

In Figur 9 ist eine weitere alternative , nicht erfindungsgemäße Ausführungsform des Ventilkolbens 27 mit dem Ventilschließglied 26 zu den vorstehend beschriebenen Ausführungsformen dargestellt. Bei dieser Ausführungsform in Figur 9 ist der Ventilkörper 58 axial verschiebbar in der Dichthülse 61 positioniert. Das Dicht-element 57 kann ebenfalls axial verschiebbar zum Ventilkolben 58 und somit auch zur Dichthülse 61 vorgesehen sein. Das Dichtelement 57 ist in axialer Richtung lose zur Dichthülse 61 und zum Ventilkörper 58 aufgenommen. Der Ventilkörper 58 ist in axialer Richtung lose zum Dichtelement 57 und zur Dichthülse 61 aufgenommen. Nach dem Positionieren des Ventilschließgliedes 26 zwischen dem Ventilsitz und dem Stößel 35 sind diese lose ineinander gesteckten Bauteile 57, 58, 61 in axialer Richtung unverlierbar gesichert.

Bei dieser Ausführungsform gemäß Figur 9 ist bevorzugt zwischen dem Dichtelement 57 und dem Ventilkörper 58 in radialer und/oder axialer Richtung zumindest eine Dichtlippe 75 vorgesehen. Diese zumindest eine Dichtlippe 75 kann am Dichtelement 57 und/oder am Ventilkörper 58 vorgesehen sein. Dadurch wird eine zusätzliche Abdichtung zwischen dem Dichtelement 57 und dem Ventilkörper 58 geschaffen.

Das zusätzliche Anbringen von zumindest einer solchen Dichtlippe 75 oder zumindest einer Dichtrippe, die zu einem Spalt zwischen dem Dichtelement 57 und dem Ventilkörper 58 ausgerichtet sind, kann auch an einem der vorstehend beschriebenen Ausführungsformen wahlweise vorgesehen sein.

## Patentansprüche

1. Ventilanordnung für ein Schaltventil (11) zur Regelung eines Massenstromes in einem Kälte- oder Wärmekreislauf, mit einem Ventilgehäuse (12), welches eine Zuführöffnung (14) und eine Abführöffnung (15) aufweist,
- mit einem Ventilkolben (27), welcher ein Ventilschließglied (26) aufweist, das in einer Schließposition (28) an einem Ventilsitz (24) an einer Durchgangsbohrung (23) zwischen der Zuführöffnung (14) und der Abführöffnung (15) anliegt und die Durchgangsbohrung (23) schließt, wobei
- der Ventilsitz (24) eine Anschlagfläche (53) und eine Dichtfläche (52) aufweist, die benachbart zueinander ausgerichtet sind,
- das Ventilschließglied (26) eine Abstützfläche (62) und eine Abdichtfläche (59) aufweist, die benachbart zueinander ausgerichtet sind,
- an dem Ventilsitz (24) oder dem Ventilschließglied (26) ein elastisches Dichtelement (57) vorgesehen ist, an welchem die Dichtfläche (52) oder die Abdichtfläche (59) ausgebildet ist,
- an der Dichtfläche (52) oder der Abdichtfläche (59) ein Dichtvorsprung (55) vorgesehen ist, der zur gegenüberliegenden Abdichtfläche (59) oder Dichtfläche (52) ausgerichtet ist,
- die Abstützfläche (62) des Ventilschließgliedes (26) und die Anschlagfläche (53) des Ventilsitzes (24) in der Schließposition (28) aneinander anliegen und eine Wegbegrenzung zwischen dem Ventilschließglied (26) und Ventilsitz (24) bilden und der Dichtvorsprung (55) in das Dichtelement (57) zumindest teilweise eingepresst ist, und
- der Ventilkolben (27) eine Dichthülse (61) und einen von der Dichthülse (61) zumindest teilweise umgebenen Ventilkörper (58) aufweist, und zwischen der Dichthülse (61) und dem Ventilkörper (58) das Dichtelement (57) aufgenommen ist,
**dadurch gekennzeichnet,**
- **dass** die Dichthülse (61) und der Ventilkörper (58) durch eine Rastverbindung (91) oder durch eine Umbördelung (78) eines Randes der Dichthülse (61) zum Ventilkörper (58) fest oder unter Bildung eines Spaltes (79) zwischen dem Ventilkörper (58) und der Umbördelung (78) der Dichthülse (61) verbunden sind.

2. Ventilanordnung nach Anspruch 1, **dadurch gekennzeichnet, dass** an einer Stirnseite der Dichthülse (61) oder an einer zum Ventilsitz (24) weisenden Stirnseite des Ventilkörpers (58) und benachbart zum Dichtelement (57) die Abstützfläche (62) vorgesehen ist.

3. Ventilanordnung nach Anspruch 1 oder 2, **dadurch gekennzeichnet, dass** zwischen dem Ventilkörper (58) und der Dichthülse (61) ein Aufnahmeraum (63) ausgebildet ist und dass das im Aufnahmeraum (63) angeordnete Dichtelement (57) ein Volumen einnimmt, welches kleiner als das Volumen des Aufnahmeraums (63) ist.

4. Ventilanordnung nach einem der vorhergehenden Ansprüche, **dadurch gekennzeichnet, dass** die den Ventilkörper (58) zumindest abschnittsweise außen umgreifende Dichthülse (61) zum Ventilsitz (24) weisend einen radial nach innen vorstehenden Ringbund (64) aufweist, welcher an einem Außenumfang oder einem Ringwulst (77) des Dichtelementes (57), der vorzugsweise in radialer Umfangsrichtung zumindest eine Unterbrechung (76) oder Vertiefung umfasst, angreift und das Dichtelement (57) im Aufnahmeraum (63) in eine axiale Richtung fixiert, oder dass die im Ventilkörper (58) eingesetzte Dichthülse (61) zum Ventilsitz (24) weisend einen radial nach außen vorstehenden Ringbund (64) aufweist, welcher an einem Innenumfang des Dichtelementes (57) angreift und dieses im Aufnahmeraum (63) fixiert.

5. Ventilanordnung nach Anspruch 4, **dadurch gekennzeichnet, dass** das Dichtelement (57) durch den Ringbund (64) der Dichthülse (61) in einer axialen Richtung zur Längsachse des Ventilkolbens (27) formschlüssig oder kraftschlüssig fixiert gehalten oder verschiebbar geführt ist und in einer radialen Richtung zur Längsachse des Ventilkolbens (27) geführt ist, vorzugsweise unter Bildung eines Freiraumes (65), im Aufnahmeraum (63) angeordnet ist.

6. Ventilanordnung nach einem der vorhergehenden Ansprüche, **dadurch gekennzeichnet, dass** zwischen dem Dichtelement (57) und dem Ventilkörper (58) zumindest eine in radialer und/oder axialer Richtung hervorstehende Dichtlippe (75) oder zumindest ein vorstehender Dichtring vorgesehen ist.

7. Ventilanordnung nach einem der vorhergehenden Ansprüche, **dadurch gekennzeichnet, dass** bei der Anordnung des Dichtvorsprungs (55) am Ventilsitz (24) der Dichtvorsprung (55) in Hubrichtung des Ventilschließgliedes (26) gegenüber der Anschlagfläche (53) des Ventilsitzes (24) hervorsteht, oder dass bei der Anordnung des Dichtvorsprunges (55) am Dichtelement (57) der Dichtvorsprung (55) in Hubrichtung des Ventilschließgliedes (26) gegenüber der Abstützfläche (62) hervorsteht und vorzugsweise der Dichtvorsprung (55) gegenüber der benachbarten Anschlagfläche (53) oder der benachbarten Abstützfläche (62) mit einer Höhe von 0,05 mm bis 0,5 mm hervorsteht.

8. Ventilanordnung nach einem der vorhergehenden Ansprüche, **dadurch gekennzeichnet, dass** der Dichtvorsprung (55) an der Dichtfläche (52) des Ventilsitzes (24) vorgesehen ist und in der Schließposition (28) des Ventilschließgliedes (26) zum Ventilsitz (24) ein Volumen von 1 % bis 30 % des Dichtelementes (57) verdrängt.

9. Ventilanordnung nach einem der vorhergehenden Ansprüche, **dadurch gekennzeichnet, dass** der Ventilsitz (24) die Anschlagfläche (53) und die Dichtfläche (52) umfasst und der Dichtvorsprung (55) an die Durchgangsbohrung (23) angrenzend positioniert ist, wobei die Durchgangsöffnung (23) einen Durchmesser von 1 mm bis 30 mm aufweist.

10. Ventilanordnung nach einem der vorhergehenden Ansprüche, **dadurch gekennzeichnet, dass** der Ventilkolben (27) dem Ventilschließglied (26) gegenüberliegend ein Pilotventil (31) aufweist, welches eine Pilotbohrung (32) im Ventilkolben (27) umfasst, die in die Durchgangsbohrung (23) mündet und eine Wegerzeugungseinrichtung (21) aufweist, welche einen betätigbaren Stößel (35) umfasst, der einen die Pilotbohrung (32) schließenden Schließkörper (33) aufnimmt und mit dem Schließkörper (33) in eine die Pilotbohrung (32) freigebende Öffnungsposition überführbar ist und vorzugsweise einen zwischen der Zuführöffnung (14) und der Pilotbohrung (32) ausgebildeten Bypasskanal (48) aufweist.

11. Ventilanordnung nach einem der vorhergehenden Ansprüche, **dadurch gekennzeichnet, dass** die Dichthülse (61) ausgehend von dem Ringbund (64) eine radial nach außenstehende Schulter (94) aufweist, die in einen äußeren zylindrischen Hülsenabschnitt (70) der Dichthülse (61) übergeht und ein Federelement (67) zwischen dem Ventilsitz (24) und dem Ventilkolben (27) an dem Ringbund (64) und/oder der Schulter (94) der Dichthülse (61) geführt ist.

12. Ventilanordnung nach Anspruch 11, **dadurch gekennzeichnet, dass** zwischen einem Außenumfang der Dichthülse (61) und einer Führungsbuchse (46) des Stößels (33) ein Bypasskanal (48) durch eine Spielpassung oder zumindest eine am Außenumfang der Dichthülse (61) ausgebildete Abflachung oder zumindest einem am Außenumfang der Dichthülse (61) oder am Innenumfang der Führungsbuchse (46) angeordneten Längskanal gebildet ist.

13. Rückschlagventil zur Regelung eines Massenstroms in einem Kälte- oder Wärmekreislauf mit einem Ventilgehäuse (12), welches eine Zuführöffnung (14) und eine Abführöffnung (15) aufweist, mit einem Ventilkolben (27), der ein zur Abführöffnung (15) weisendes Ventilschließglied (26) aufweist, das in einer Schließposition an einem an einer Durchgangsbohrung (23) zwischen der Zuführöffnung (14) und der Abführöffnung (15) angeordneten Ventilsitz (24) anliegt und in dieser Schließposition durch ein Federelement (67) gehalten ist, **dadurch gekennzeichnet, dass** der Ventilsitz (24) und das Ventilschließglied (26) gemäß einer Ventilanordnung (51) nach einem oder mehreren der vorhergehenden Ansprüche ausgebildet ist.

## Claims

1. Valve arrangement for a switching valve (11) for regulating a mass flow in a cooling or heating circuit, having a valve housing (12) which has a feed opening (14) and a discharge opening (15),
- with a valve piston (27) which has a valve closing member (26) which, in a closed position (28), bears against a valve seat (24) on a through bore (23) between the feed opening (14) and the discharge opening (15) and closes the through bore (23), wherein
- the valve seat (24) has a stop surface (53) and a sealing surface (52) which are aligned adjacent to one another,
- the valve closing member (26) has a support surface (62) and a sealing surface (59) which are aligned adjacent to one another,
- an elastic sealing element (57) is provided on the valve seat (24) or the valve closing member (26), on which the sealing surface (52) or the sealing surface (59) is formed,
- a sealing projection (55) is provided on the sealing surface (52) or the sealing surface (59), which is aligned with the opposite sealing surface (59) or sealing surface (52),
- the support surface (62) of the valve closing member (26) and the stop surface (53) of the valve seat (24) bear against one another in the closed position (28) and form a path limitation between the valve closing member (26) and the valve seat (24), and the sealing projection (55) is at least partially pressed into the sealing element (57), and
- the valve piston (27) has a sealing sleeve (61) and a valve body (58) at least partially surrounded by the sealing sleeve (61), and the sealing element (57) is accommodated between the sealing sleeve (61) and the valve body (58),
**characterized in that**
- **in that** the sealing sleeve (61) and the valve body (58) are firmly connected to the valve body (58) by a latching connection (91) or by a beading (78) of an edge of the sealing sleeve (61) to form a gap (79) between the valve body (58) and the beading (78) of the sealing sleeve (61).

2. Valve arrangement according to claim 1, **characterized in that** the support surface (62) is provided on an end face of the sealing sleeve (61) or on an end face of the valve body (58) facing the valve seat (24) and adjacent to the sealing element (57) .

3. Valve arrangement according to claim 1 or 2, **characterized in that** a receiving space (63) is formed between the valve body (58) and the sealing sleeve (61) and **in that** the sealing element (57) arranged in the receiving space (63) occupies a volume which is smaller than the volume of the receiving space (63).

4. Valve arrangement according to one of the preceding claims, **characterized in that** the sealing sleeve (61) engaging around the valve body (58) at least in sections on the outside and pointing towards the valve seat (24) has a radially inwardly projecting annular collar (64) which engages on an outer circumference or an annular bead (77) of the sealing element (57), which preferably comprises at least one interruption (76) or depression in the radial circumferential direction, and fixes the sealing element (57) in the receiving space (63) in an axial direction, and fixes the sealing element (57) in the receiving chamber (63) in an axial direction, or that the sealing sleeve (61) inserted in the valve body (58) has a radially outwardly projecting annular collar (64) facing the valve seat (24), which engages on an inner circumference of the sealing element (57) and fixes the latter in the receiving chamber (63).

5. Valve arrangement according to claim 4, **characterized in that** the sealing element (57) is held fixed or guided displaceably by the annular collar (64) of the sealing sleeve (61) in an axial direction relative to the longitudinal axis of the valve piston (27) in a form-fitting or force-fitting manner and is guided in a radial direction relative to the longitudinal axis of the valve piston (27), preferably forming a free space (65), in the receiving space (63).

6. Valve arrangement according to one of the preceding claims, **characterized in that** at least one sealing lip (75) projecting in the radial and/or axial direction or at least one projecting sealing ring is provided between the sealing element (57) and the valve body (58).

7. Valve arrangement according to one of the preceding claims, **characterized in that**, when the sealing projection (55) is arranged on the valve seat (24), the sealing projection (55) projects in the stroke direction of the valve closing member (26) with respect to the stop surface (53) of the valve seat (24), or that when the sealing projection (55) is arranged on the sealing element (57), the sealing projection (55) protrudes in the stroke direction of the valve closing member (26) with respect to the support surface (62) and preferably the sealing projection (55) protrudes with respect to the adjacent stop surface (53) or the adjacent support surface (62) with a height of 0.05 mm to 0.5 mm.

8. Valve arrangement according to one of the preceding claims, **characterized in that** the sealing projection (55) is provided on the sealing surface (52) of the valve seat (24) and displaces a volume of 1 % to 30 % of the sealing element (57) in the closed position (28) of the valve closing member (26) with respect to the valve seat (24).

9. Valve arrangement according to one of the preceding claims, **characterized in that** the valve seat (24) comprises the stop surface (53) and the sealing surface (52) and the sealing projection (55) is positioned adjacent to the through hole (23), wherein the through hole (23) has a diameter of 1 mm to 30 mm.

10. Valve arrangement according to one of the preceding claims, **characterized in that** the valve piston (27) has, opposite the valve closing member (26), a pilot valve (31) which comprises a pilot bore (32) in the valve piston (27), which pilot bore opens into the through bore (23) and has a path generating device (21), which comprises an actuable plunger (35) which receives a closing body (33) closing the pilot bore (32) and can be transferred with the closing body (33) into an opening position releasing the pilot bore (32) and preferably has a bypass channel (48) formed between the feed opening (14) and the pilot bore (32).

11. Valve arrangement according to one of the preceding claims, **characterized in that** the sealing sleeve (61), starting from the annular collar (64), has a radially outwardly projecting shoulder (94) which merges into an outer cylindrical sleeve section (70) of the sealing sleeve (61), and a spring element (67) is guided between the valve seat (24) and the valve piston (27) on the annular collar (64) and/or the shoulder (94) of the sealing sleeve (61).

12. Valve arrangement according to claim 11, **characterized in that** a bypass channel (48) is formed between an outer circumference of the sealing sleeve (61) and a guide bushing (46) of the tappet (33) by a clearance fit or at least one flattened portion formed on the outer circumference of the sealing sleeve (61) or at least one longitudinal channel arranged on the outer circumference of the sealing sleeve (61) or on the inner circumference of the guide bushing (46).

13. Check valve for regulating a mass flow in a refrigeration or heating circuit, having a valve housing (12) which has a feed opening (14) and a discharge opening (15), having a valve piston (27) which has a valve closing member (26) pointing towards the discharge opening (15), which, in a closed position, bears against a valve seat (24) arranged on a through bore (23) between the feed opening (14) and the discharge opening (15) and is held in this closed position by a spring element (67), **characterized in that** the valve seat (24) and the valve closing member (26) are designed in accordance with a valve arrangement (51) according to one or more of the preceding claims.

## Revendications

1. Agencement de soupape pour une soupape de commutation (11) destinée à réguler un débit massique dans un circuit de réfrigération ou de chauffage, comprenant un boîtier de soupape (12) qui présente un orifice d'alimentation (14) et un orifice d'évacuation (15),
- avec un piston de soupape (27) qui présente un organe de fermeture de soupape (26) qui, dans une position de fermeture (28), s'applique contre un siège de soupape (24) sur un alésage de passage (23) entre l'ouverture d'alimentation (14) et l'ouverture d'évacuation (15) et ferme l'alésage de passage (23), où
- le siège de soupape (24) présente une surface de butée (53) et une surface d'étanchéité (52) qui sont orientées de manière adjacente l'une à l'autre,
- l'organe de fermeture de soupape (26) présente une surface de support (62) et une portée d'étanchéité (59) qui sont orientées de manière adjacente l'une à l'autre,
- un élément d'étanchéité élastique (57) est prévu sur le siège de soupape (24) ou sur l'organe de fermeture de soupape (26), sur lequel est formée la surface d'étanchéité (52) ou la portée d'étanchéité (59),
- une saillie d'étanchéité (55) est prévue sur
la surface d'étanchéité (52) ou la portée d'étanchéité (59), laquelle est orientée vers la portée d'étanchéité (59) ou la surface d'étanchéité (52) opposée,
- la surface d'appui (62) de l'organe de fermeture de soupape (26) et la surface de butée (53) du siège de soupape (24) s'appliquent l'une contre l'autre dans la position de fermeture (28) et forment une limitation de course entre l'organe de fermeture de soupape (26) et le siège de soupape (24), et la saillie d'étanchéité (55) est enfoncée au moins partiellement dans l'élément d'étanchéité (57), et
- le piston de soupape (27) présente une douille d'étanchéité (61) et un corps de soupape (58) entouré au moins partiellement par la douille d'étanchéité (61), et l'élément d'étanchéité (57) est reçu entre la douille d'étanchéité (61) et le corps de soupape (58),
**caractérisé en ce que**
- **en ce que** le manchon d'étanchéité (61) et le corps de soupape (58) sont reliés par une liaison par encliquetage (91) ou par un bord rabattu (78) d'un manchon d'étanchéité (61) vers le corps de soupape (58) de manière fixe ou en formant une fente (79) entre le corps de soupape (58) et le bord rabattu (78) du manchon d'étanchéité (61).

2. Agencement de soupape selon la revendication 1, **caractérisé en ce que** la surface d'appui (62) est prévue sur une face frontale de la douille d'étanchéité (61) ou sur une face frontale du corps de soupape (58) orientée vers le siège de soupape (24) et à proximité de l'élément d'étanchéité (57).

3. Agencement de soupape selon la revendication 1 ou 2, **caractérisé en ce qu'**un espace de réception (63) est formé entre le corps de soupape (58) et la douille d'étanchéité (61) et **en ce que** l'élément d'étanchéité (57) disposé dans l'espace de réception (63) occupe un volume qui est inférieur au volume de l'espace de réception (63).

4. Agencement de soupape selon l'une des revendications précédentes, **caractérisé en ce que** la douille d'étanchéité (61) entourant extérieurement le corps de soupape (58) au moins par sections présente, en direction du siège de soupape (24), un collet annulaire (64) faisant saillie radialement vers l'intérieur, qui s'applique contre une périphérie extérieure ou un bourrelet annulaire (77) de l'élément d'étanchéité (57), qui comprend de préférence dans la direction périphérique radiale au moins une interruption (76) ou un renfoncement, et fixe l'élément d'étanchéité (57) dans l'espace de réception (63) dans une direction axiale, ou **en ce que** la douille d'étanchéité (61) insérée dans le corps de soupape (58) présente, en étant orientée vers le siège de soupape (24), un collet annulaire (64) faisant saillie radialement vers l'extérieur, qui s'engage sur une périphérie intérieure de l'élément d'étanchéité (57) et fixe celui-ci dans l'espace de réception (63).

5. Agencement de soupape selon la revendication 4, **caractérisé en ce que** l'élément d'étanchéité (57) est maintenu fixement ou guidé de manière déplaçable par le collet annulaire (64) de la douille d'étanchéité (61) dans une direction axiale par rapport à l'axe longitudinal du piston de soupape (27) par engagement positif ou par adhérence et est guidé dans une direction radiale par rapport à l'axe longitudinal du piston de soupape (27), de préférence en formant un espace libre (65), dans l'espace de réception (63).

6. Agencement de soupape selon l'une des revendications précédentes, **caractérisé en ce qu'**entre l'élément d'étanchéité (57) et le corps de soupape (58) est prévue au moins une lèvre d'étanchéité (75) faisant saillie dans la direction radiale et/ou axiale ou au moins une bague d'étanchéité saillante.

7. Agencement de soupape selon l'une des revendications précédentes, **caractérisé en ce que**, lorsque la saillie d'étanchéité (55) est disposée sur le siège de soupape (24), la saillie d'étanchéité (55) fait saillie dans le sens de la course de l'organe de fermeture de soupape (26) par rapport à la surface de butée (53) du siège de soupape (24), ou **en ce que**, lorsque la saillie d'étanchéité (55) est disposée sur l'élément d'étanchéité (57), la saillie d'étanchéité (55) fait saillie dans le sens de la course de l'organe de fermeture de soupape (26) par rapport à la surface d'appui (62) et, de préférence, la saillie d'étanchéité (55) fait saillie d'une hauteur de 0,05 mm à 0,5 mm par rapport à la surface de butée (53) voisine ou à la surface d'appui (62) voisine.

8. Agencement de soupape selon l'une des revendications précédentes, **caractérisé en ce que** la saillie d'étanchéité (55) est prévue sur la surface d'étanchéité (52) du siège de soupape (24) et déplace un volume de 1 % à 30 % de l'élément d'étanchéité (57) vers le siège de soupape (24) dans la position de fermeture (28) de l'organe de fermeture de soupape (26).

9. Agencement de soupape selon l'une quelconque des revendications précédentes, **caractérisé en ce que** le siège de soupape (24) comprend la surface de butée (53) et la surface d'étanchéité (52), et la saillie d'étanchéité (55) est positionnée de manière adjacente au trou traversant (23), le trou traversant (23) ayant un diamètre de 1 mm à 30 mm.

10. Agencement de soupape selon l'une des revendications précédentes, **caractérisé en ce que** le piston de soupape (27) présente, en face de l'organe de fermeture de soupape (26), une soupape pilote (31) qui comprend un alésage pilote (32) dans le piston de soupape (27), qui débouche dans l'alésage de passage (23) et présente un dispositif de génération de course (21), qui comprend un poussoir (35) pouvant être actionné, qui reçoit un corps de fermeture (33) fermant l'alésage pilote (32) et qui peut être transféré avec le corps de fermeture (33) dans une position d'ouverture libérant l'alésage pilote (32) et qui présente de préférence un canal de dérivation (48) formé entre l'ouverture d'alimentation (14) et l'alésage pilote (32).

11. Agencement de soupape selon l'une des revendications précédentes, **caractérisé en ce que** la douille d'étanchéité (61) présente, en partant du collet annulaire (64), un épaulement (94) faisant saillie radialement vers l'extérieur, qui se transforme en une section de douille cylindrique extérieure (70) de la douille d'étanchéité (61) et un élément de ressort (67) est guidé entre le siège de soupape (24) et le piston de soupape (27) sur le collet annulaire (64) et/ou l'épaulement (94) de la douille d'étanchéité (61).

12. Agencement de soupape selon la revendication 11, **caractérisé en ce qu'**entre une périphérie extérieure de la douille d'étanchéité (61) et une douille de guidage (46) du poussoir (33), un canal de dérivation (48) est formé par un ajustement avec jeu ou au moins un méplat formé sur la périphérie extérieure de la douille d'étanchéité (61) ou au moins un canal longitudinal disposé sur la périphérie extérieure de la douille d'étanchéité (61) ou sur la périphérie intérieure de la douille de guidage (46).

13. Clapet anti-retour pour la régulation d'un débit massique dans un circuit de réfrigération ou de chauffage, comprenant un corps de clapet (12) qui présente un orifice d'alimentation (14) et un orifice d'évacuation (15), avec un piston de clapet (27) qui présente un organe de fermeture de clapet (26) orienté vers l'orifice d'évacuation (15), qui, dans une position de fermeture, s'applique contre un siège de soupape (24) disposé sur un alésage de passage (23) entre l'ouverture d'alimentation (14) et l'ouverture d'évacuation (15) et qui est maintenu dans cette position de fermeture par un élément de ressort (67), **caractérisé en ce que** le siège de soupape (24) et l'obturateur de soupape (26) sont réalisés selon un agencement de soupape (51) selon une ou plusieurs des revendications précédentes.
